(19) **Europäisches Patentamt**
**European Patent Office**
**Office européen des brevets**

(11) **EP 3 139 773 B1**

(12) **EUROPEAN PATENT SPECIFICATION**

(45) Date of publication and mention
of the grant of the patent:
**29.01.2020 Bulletin 2020/05**

(51) Int Cl.:
*A23L 33/00* (2016.01)    *A23C 9/00* (2006.01)

(21) Application number: **15777557.8**

(86) International application number:
**PCT/CN2015/076048**

(22) Date of filing: **08.04.2015**

(87) International publication number:
**WO 2015/154662 (15.10.2015 Gazette 2015/41)**

(54) **GENDER SPECIFIC SYNTHETIC NUTRITIONAL COMPOSITIONS AND NUTRITIONAL SYSTEMS COMPRISING THEM**

GESCHLECHTSSPEZIFISCHE SYNTHETISCHE NÄHRSTOFFZUSAMMENSETZUNGEN UND NÄHRSTOFFSYSTEME DAMIT

COMPOSITIONS NUTRITIONNELLES SYNTHÉTIQUES SPÉCIFIQUES DU SEXE ET SYSTÈMES NUTRITIONNELS LES COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2014 PCT/CN2014/075015**

(43) Date of publication of application:
**15.03.2017 Bulletin 2017/11**

(73) Proprietor: **Société des Produits Nestlé S.A.**
**1800 Vevey (CH)**

(72) Inventors:
• **AFFOLTER, Michael**
**CH-1073 Savigny (CH)**
• **THAKKAR, Sagar**
**1817 Brent (CH)**
• **DECASTRO, Carlos Antonio**
**CH-1203 Geneva (CH)**

(74) Representative: **Gagliardi, Tatiana et al**
**Société des Produits Nestlé S.A.**
**Avenue Nestlé 55**
**1800 Vevey (CH)**

(56) References cited:
**EP-A1- 2 452 575     WO-A1-2006/026879**
**WO-A1-2015/086170     CN-A- 1 280 788**
**CN-A- 103 404 595     US-A1- 2013 261 183**

• **BUTTE NF ET AL: "Infant feeding mode affects early growth and body composition", PEDIATRICS, vol. 106, no. 6, December 2000 (2000-12), pages 1355-1366, XP009195249,**
• **ALTUFAILY YA ET AL: "THE EFFECT OF INFANT GENDER ON THE QUALITY OF BREAST MILK", KUFA MED. JOURNAL, vol. 12, no. 1, 1 January 2009 (2009-01-01), pages 435-440, XP55229844,**
• **STAM J ET AL.: 'Can we define an infant's need from the composition of human milk?' THE AMERICAN JOURNAL OF CLINICAL NUTRITION vol. 98, no. 2, 10 July 2013, pages 521S - 528S, XP055229454**

## Description

**Technical field:** The invention relates to gender specific synthetic nutritional compositions, to nutritional systems comprising them and, to their use to provide optimised nutrition and/or one or more health benefit to an infant.

## Background of the invention

Even though breastfeeding is optimal for infants, the existence of certain conditions may mean that it is contraindicated (AAP, 2012; Lawrence, 2013). In such cases, where the sole source of nutrition is not available to the infant, alternative strategies to feed them have to be devised. Feeding infants with Synthetic nutritional compositions e.g. Infant formula is one such strategy. The compositions of the aforementioned synthetic nutritional compositions aim to replicate those of human milk. However, replicating HM is not a simple task. HM not only contain numerous components, its composition is extremely dynamic and these dynamic changes remain largely unexplored and uncharacterized. Whilst it is known that components and/or their quantities may vary depending on a variety of factors including the stage of lactation, circadian rhythms and even gender, it is not known which of the numerous components vary or how they vary e.g. by stage of lactation and/or gender.

Surprisingly it has now been found that up to 1 month, more particularly up to 2 weeks, and 2 weeks to 1 month, postpartum, there can be a difference in the range of the total protein content found in HM produced by mothers to girls in comparison to mothers to boys. This finding stems from a cross-sectional study of HM wherein, HM samples from mothers to either boys or girls were collected at various stages postpartum and analysed. Further, it was also surprisingly found that up to 1 month, more particularly up to 2 weeks and 2 weeks to 1 month, postpartum, the mean total protein content of HM produced by mothers to boys was higher than that produced for mothers to girls.

Because these gender differences in the total protein content of HM have never been previously identified, they are not reflected in the compositions of synthetic nutritional compositions available today. Further, because these gender differences were not known. There was no incentive for gender specific synthetic nutritional compositions comprising total protein within a range identified for a particular gender to be developed.

Optimum protein intake helps to ensure optimum growth and development in infants. Further, optimum protein intake has been linked to a host of health benefits e.g. optimized immune functions, better gut maturation, optimum growth and development physically and cognitively and, a lower risk of obesity and cardiovascular disease.

Optimum growth and development and/or health benefits may be immediate and/or long term. Long term health benefits may only be evident in months or years e.g. 6 months, 9 months, 12 months, 5 years, 10 years, or 20 years.

CN103404595 describes a dedicated infant formula for infant boys, which comprises raw milk, demineralized whey powder, vegetable oil, docosahexaenoic acid (DHA), prebiotics, taurine, L-carnitine and/or L-carnitine salt, choline substances, composite nucleotide and mineral substances. The dedicated infant formula optimizes the ratio of intelligence nutrient substances (DHA, ARA, choline and the like), especially improves the content of the DHA and the like to be more suitable for the intelligence development requirement of the infant boys, optimizes the content of the prebiotics to be more in tune with the digestive absorption requirement of the infant boys, and further optimizes the ratio of energy substance, protein, fat, carbohydrate and the like to be more suitable for the requirement of the infant boys.

US2013/261183 describes formulations and dietary products that provide compositions comprising optimized levels of nutrients such as phytochemicals, antioxidants, vitamins, minerals, lipids, proteins, carbohydrates, probiotics, prebiotics, microorganisms and fiber.

Accordingly, there remains a need for gender specific synthetic nutritional compositions, and nutritional systems comprising them, having compositions within which the identified gender differences, with respect to total protein content, found in HM up to 1 month, more particularly up to 2 weeks, and 2 weeks to 1 month, postpartum are more accurately reflected and thereby optimised.

## Summary of the invention

The invention is set out in the claims.

The invention relates in a first aspect to a nutritional system comprising:

- at least one male specific synthetic nutritional composition for an infant up to 1 month of age wherein, the total protein content is adapted based on that found in human milk produced for an infant of the same gender and age and wherein said total protein content is 0.7 to 2.3 g/100 mL, and - at least one female gender specific synthetic nutritional composition for an infant up to one month of age wherein, the total protein content is adapted based on that found in human milk produced for an infant of the gender and age and wherein said protein content is 0.2 to 2.0 g/100 mL,
  wherein said gender specific synthetic nutritional compositions are for infant of the same age, and wherein the total protein content in said male gender specific nutritional composition is higher than that of said female gender specific synthetic nutritional composition, and wherein said nutritional system further comprises gender specific synthetic nutritional compositions for infants of more than 1 month of age wherein, the total protein content of said gender specific synthetic nutritional compositions does not differ by gender of infants of the same age, and/or wherein said nutritional system further comprises gender specific neutral synthetic nutritional compositions for infants of more than 1 month of age.

In a second aspect, the invention relates to the above nutritional system for use in a therapeutic method to treat, protect of mitigate sub optimal growth and development in an infant.

The inventors have found that the total protein content range of HM can vary up to 1 month, more particularly up to 2 weeks, and 2 weeks to 1 month, postpartum depending on the gender of the mother's infant. In light of this finding the inventors have developed gender specific nutritional compositions and nutritional systems comprising them that reflect these identified gender differences. Prior to aforementioned findings the skilled person has not incentive to develop such gender specific synthetic nutritional compositions or to include them in nutritional systems.

The total protein content of the gender specific synthetic nutritional compositions comprised in the nutritional systems of the invention, more accurately reflect the total protein content of HM produced for infants of the same gender and age. In light of this and, because HM is considered optimal with respect to infant nutrition, they can provide an optimized amount of total protein to an infant, in particular an infant of up to 1 month of age, more particularly up to 2 weeks of age and/or 2 weeks to 1 month of age.

The gender specific synthetic nutritional compositions can be prepared from a gender neutral synthetic nutritional composition by measuring out an appropriate amount of said gender neutral synthetic nutritional composition and mixing it with an additive and/or diluent.

Since optimized protein intake helps to ensure optimum growth and development in infants, the nutritional systems of the invention, can also be used to treat, prevent or mitigate sub optimal growth and development e.g. obesity in an infant.

The gender specific synthetic nutritional composition comprised in the nutritional systems of the present invention may be selected from the group consisting of: infant formula, and a composition that is intended to be added or diluted with human milk e.g. HM fortifier.

In addition to that set out above, the inventors have also found that the mean total protein content of HM does not differ by gender after 1 month postpartum. In light of this in addition to comprising the gender specific synthetic nutritional compositions, the nutritional systems disclosed herein comprise synthetic nutritional compositions for infants more than 1 month of age wherein, the total protein content does not differ by gender for infants of the same age. Accordingly, the nutritional systems of the invention may also provide optimized nutrition and/or one or more health benefits for an infant, in particular an infant of up to 12 months old, up to 9 months old, up to 8months old, up to 6 month old, up to 3 months old, up to 2 months old up to 1 month old, up to 2 weeks old.

## Drawings

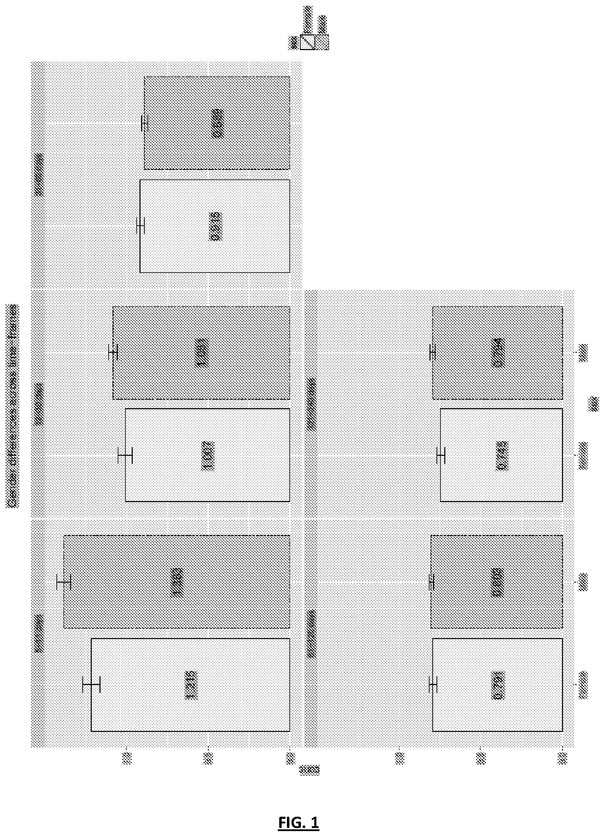

FIG.1 is a graphical representation of the mean total protein content of HM by gender at up to 2 weeks (5-11 days), 2 weeks to 1 month (12-30 days), 1 to 2 months (31 to 60 days), 2 to 4 months (61 to 120 days), and 4 to 8 months (121 to 240 days) postpartum.

## Detailed Description

As stated herein, the inventors performed a cross sectional study evaluating the nutrient composition of HM collected from mothers at various stages of lactation (up to 2 weeks (5-11 days), 2 weeks to 1 month (12-30 days), 1 to 2 months (31 to 60 days), 2 to 4 months (61 to 120 days), and 4 to 8 months (121 to 240 days) postpartum). The study indicated that there can be differences in the min and max ranges for the total protein content by gender of a mother's infant. Surprisingly, the results of this study also indicated that that up to 1 month, more particularly up to 2 weeks, and 2 weeks to 1 month postpartum, there is a difference in the mean total protein content of HM depending on the gender of the mother's infant. Further details of the study, analysis techniques and results are given in example 1.

Based on the findings of the study, the inventors have designed gender specific synthetic nutritional compositions for infants up to 1 month, up to 2 weeks, and 2 weeks to 1 month of age wherein, the total protein content is adapted based on that found in HM produced for an infant of the same gender and age.

The term "gender specific synthetic nutritional composition" as used herein refers to any synthetic nutritional composition, intended to be consumed by an infant that is specifically adapted to the nutritional needs of either a female or male enfant.

Appropriate types of gender specific synthetic nutritional compositions may be dependent on age. Non limiting examples of gender specific synthetic nutritional compositions for infants from birth to 4 months include; infant formulae, and a composition for infants that is intended to be added or diluted with HM e.g. HM fortifier. Non limiting examples of gender specific synthetic nutritional compositions for infants from 4 months to 12 months include infant formulae, a composition for infants that is intended to be added or diluted with HM e.g. HM fortifier, or food stuffs intended for consumption by infants either alone or in combination with HM e.g. complementary foods.

The term "infant" as used herein refers to a human infant of 12 months of age or less.

There is provided a gender specific synthetic nutritional composition for an infant up to 1 month of age wherein, the total protein content is adapted based on that found in HM produced for an infant of the same gender and age.

The gender specific synthetic nutritional composition can be a male specific synthetic nutritional composition or a female specific synthetic nutritional composition for an infant up to 1 month of age, up to 2 weeks of age or 2 weeks to 1 month of age.

In an embodiment the gender specific synthetic nutritional composition is a male specific synthetic nutritional composition for an infant of up to 1 month of age and comprises a total protein content of 0.7g to 2.3g, 0.7g to 2.02g, 1.06 to 1.7g, 1.3g to 2.3g, or 1.08g to 1.38g, per 100mL.

The total protein content of the gender specific synthetic nutritional compositions is expressed in g/100mL. This may refer to the total protein content of a reconstituted gender specific synthetic nutritional composition.

In an embodiment the gender specific synthetic nutritional composition is a female specific synthetic nutritional composition for an infant of up to 1 month of age and comprises a total protein content of 0.2g to 2.0g, 0.49g to 1.57g, 0.75 to 1.57g, 1.21g to 1.01g, or 0.2g to 1.295g, per 100mL.

In an embodiment the gender specific synthetic nutritional composition is a male specific synthetic nutritional composition for an infant of up to 2 weeks of age and comprises a total protein content of 0.7g to 2.3g, 0.74g to 2.02g, 1.06 to 1.7g, 1.3g to 2.3g, or 1.38g, per 100mL.

In an embodiment the gender specific synthetic nutritional composition is a female specific synthetic nutritional composition for an infant of up to 2 weeks of age and comprises a total protein content of 0.6g to 2g, 0.85g to 1.57g, 0.6g to 1.295g, or 1.21g, per 100mL.

In an embodiment the gender specific synthetic nutritional composition is a male specific synthetic nutritional composition for an infant of 2 weeks to 1 month of age and comprises a total protein content of 0.8g to 1.9g, 0.88g to 1.48g, 0.88 to 1.28g, 1.05g to 2.3g, or 1.08g, per 100mL.

In an embodiment the gender specific synthetic nutritional composition is female specific synthetic nutritional composition for an infant of 2 weeks to 1 month of age and comprises a total protein content of 0.2g to 1.9g, 0.49g to 1.9g, 0.75g to 1.27g, 0.2g to 1.045g, or 1.01g, per 100gmL.

Total protein content is a measure of the concentration of all proteins comprised in a gender specific synthetic nutritional composition.

Total protein can be measured by methods well known in the art. In particular total protein content can be measured by Kjeldahl nitrogen analysis as described in Lynch & Barbano (1999) J AOAC International, vol 82, p1389, or colorimetric methods such as Bradford or BCA assay as described in Bradford (1976) Anal. Biochem. 72: 248; Smith et al. (1985) Anal. Biochem. 150: 76).

Any source of protein known to be employed in the types of synthetic nutritional compositions disclosed herein may be comprised within in the gender specific synthetic nutritional compositions of the invention. Non limiting examples include casein, lactoferrin, serum albumin, alpha-lactalbumin, whey protein, soy protein, rice protein, corn protein, oat protein, barley protein, wheat protein, rye protein, pea protein, egg protein, sunflower seed protein, potato protein, fish protein, meat protein, immunoglobins, and combinations of thereof.

The proteins may be intact, hydrolysed, partially hydrolysed or any combination thereof.

The gender specific synthetic nutritional compositions can also comprise any other ingredients or excipients known to be employed in synthetic nutritional compositions.

Non limiting examples of such ingredients include: carbohydrates, oligosaccharides, lipids, prebiotics or probiotics, essential fatty acids, nucleotides, nucleosides, vitamins, minerals and other micronutrients.

Non limiting examples of carbohydrates include lactose, saccharose, maltodexirin, starch, and combinations thereof.

Non limiting examples of lipids include: palm olein, high oleic sunflower oil, high oleic safflower oil, canola oil, fish oil, coconut oil, bovine milk fat, and combinations thereof.

Non limiting examples of essential fatty acids include: linoleic acid (LA), $\alpha$-linolenic acid (ALA) and polyunsaturated fatty acids (PUFAs). The nutritional compositions of the invention may further contain gangliosides monosialoganglioside-3 (GM3) and disialogangliosides 3 (GD3), phospholipids such as sphingomyelin, phospholipids phosphatidylcholine, phosphatidylethanolamine, phosphatidylinositol, phosphatidylserine, and combinations thereof.

None limiting examples of prebiotics include: oligosaccharides optionally containing fructose, galactose, mannose; dietary fibers, in particular soluble fibers, soy fibers; inulin; and combinations thereof. Preferred prebiotics are fructo-oligosaccharides (FOS), galacto-oligosaccharides (GOS), isomalto-oligosaccharides (IMO), xylo-oligosaccharides (XOS), arabino-xylo oligosaccharides (AXOS), mannan-oligosaccharides (MOS), oligosaccharides of soy, glycosylsucrose (GS), lactosucrose (LS), lactulose (LA), palatinose-oligosaccharides (PAO), maltooligosaccharides, gums and/or hydrolysates thereof, pectins and/or hydrolysates thereof, and combinations of the foregoing.

Further examples of oligosaccharide are described in Wrodnigg, T. M.; Stutz, A.E. (1999) Angew. Chem. Int. Ed. 38:827-828 and in WO 2012/069416 which is incorporated herein by reference.

Non limiting examples of probiotics include: *Bifidobacterium, Lactobacillus, Lactococcus, Enterococcus, Streptococcus, Kluyveromyces, Saccharoymces, Candida,* in particular selected from the group consisting of *Bifidobacterium longum, Bifidobacterium lactis, Bifidobacterium animalis, Bifidobacterium breve, Bifidobacterium infantis, Bifidobacterium adolescentis, Lactobacillus acidophilus, Lactobacillus casei, Lactobacillus paracasei, Lactobacillus salivarius, Lactobacillus lactis, Lactobacillus rhamnosus, Lactobacillus johnsonii, Lactobacillus plantarum, Lactobacillus salivarius, Lactococcus lactis, Enterococcus faecium, Saccharomyces cerevisiae, Saccharomyces boulardii* or mixtures thereof, preferably selected from the group consisting of *Bifidobacterium longum* NCC3001 (ATCC BAA-999), *Bifidobacterium longum* NCC2705 (CNCM I-2618), *Bifidobacterium longum* NCC490 (CNCM 1-2170), *Bifidobacterium lactis* NCC2818 (CNCM 1-3446), *Bifidobacterium breve* strain A, *Lactobacillus paracasei* NCC2461 (CNCM I-2116), *Lactobacillus johnsonii* NCC533 (CNCM 1-1225), *Lactobacillus rhamnosus GG* (ATCC53103), *Lactobacillus rhamnosus* NCC4007 (CGMCC 1.3724), *Enterococcus faecium SF 68* (NCC2768; NCIMB10415), and combinations thereof.

Non limiting examples of Nucleotides include: cytidine monophosphate (CMP), uridine monophosphate (UMP), adenosine monophosphate (AMP), guanosine monophosphate (GMP), and combinations thereof.

Non limiting examples of vitamins and minerals include: vitamin A, vitamin B1, vitamin B2, vitamin B6, vitamin Bi2, vitamin E. vitamin K. vitamin C, vitamin D, folic acid, inositol, niacin, biotin, pantothenic acid, choline, calcium, phosphorous, iodine, iron, magnesium, copper, zinc, manganese, chloride, potassium, sodium, selenium, chromium, molybdenum, taurine, L-carnitine, and combinations thereof. Minerals are usually added in salt form.

Other suitable and desirable ingredients of synthetic nutritional compositions, that may be employed in the gender specific nutritional compositions of the invention, are described in guidelines issued by the Codex Alimentarius with respect to the type of synthetic nutritional composition in question e.g. Infant formula, HM fortifier, follow on formula, or food stuffs intended for consumption by infants e.g. complementary foods.

The gender specific compositions of the nutritional system of the invention may be prepared by methods well known in the art for preparing that type of synthetic nutritional composition e.g. infant formulae, follow on formulae, a composition for infants that is intended to be added or diluted with HM e.g. HM fortifier, or food stuffs intended for consumption by infants either alone or in combination with HM e.g. complementary foods.

An exemplary method for preparing a gender specific powdered infant formula is as follows. A protein source, carbohydrate source, and fat source may be blended together in appropriate proportions. Emulsifiers maybe included in the blend. Vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture.

The liquid mixture may then be thermally treated to reduce bacterial loads. For example, the liquid mixture may be rapidly heated to a temperature in the range of about 80°C to about 110°C for about 5 seconds to about 5 minutes. This may be carried out by steam injection or by heat exchanger; for example a plate heat exchanger.

The liquid mixture may then be cooled to about 60°C to about 85°C; for example by flash cooling. The liquid mixture may then be homogenised; for example in two stages at about 7 MPa to about 40 MPa in the first stage and about 2 MPa to about 14 MPa in the second stage. The homogenised mixture may then be further cooled to add any heat sensitive components such as vitamins and minerals. The pH and solids content of the homogenised mixture is conveniently standardised at this point.

The homogenised mixture can be transferred to a suitable drying apparatus such as a spray drier or freeze drier and converted to powder. The powder should have a moisture content of less than about 3% by weight.

If it is desired probiotic(s) can be added, they may be cultured according to any suitable method and prepared for addition to the infant formula by freeze-drying or spray-drying for example. Alternatively, bacterial preparations can be bought from specialist suppliers such as Christian Hansen and Morinaga already prepared in a suitable form for addition to food products such as infant formula. Such bacterial preparations may be added to the gender specific powdered infant formula by dry mixing.

The gender specific compositions of the nutritional system according to the present invention may also be prepared from a gender neutral synthetic nutritional composition in a method comprising; measuring out an appropriate amount of said gender neutral synthetic nutritional composition and mixing it with an additive and/or a diluent e.g. water so as to arrive at a gender specific nutritional composition in accordance with the nutritional system of the invention.

The additive may be a gender specific additive comprising protein in a particular concentration so that when mixed with the gender neutral synthetic nutritional composition, and optionally a diluent, the resulting mixture is a gender specific synthetic nutritional composition of the nutritional system of the invention.

The gender neutral synthetic nutritional composition can be prepared by methods well known in the art. For example, as laid out above for infant formula.

One or more of the gender specific synthetic nutritional compositions can be included in a nutritional system of the invention.

The term "nutritional system" as used herein refers to a collection of more than one synthetic nutritional composition advertised or sold as part of the same product range e.g. a collection of infant formulas sold under the same brand and adapted to the nutritional needs of infants of differing genders and/or ages. The synthetic nutritional compositions making up the nutritional system may be packaged individually e.g. in capsules or boxes. Said packages can be sold individually, grouped together e.g. wrapped by plastic film or combined in a box, or in a combination of these two ways.

The nutritional system may comprise only gender specific synthetic nutritional compositions, or it may comprise a mix of gender specific and gender neutral synthetic nutritional compositions.

The term "gender neutral" as used herein is synonymous with unisex.

The nutritional system comprises at least one gender specific synthetic nutritional composition for a male infant and at least one gender specific nutritional composition for a female infants wherein, said male and female gender specific synthetic nutritional compositions are for infants of the same age selected from the group consisting of: up to 1 month of age, up to 2 weeks of age or, 2 weeks to 1 month of age.

The total protein content of said male gender specific synthetic nutritional composition is higher than that of said female gender specific synthetic nutritional composition.

The total protein content of the male gender synthetic nutritional compositions may be higher by any amount.

In an embodiment the nutritional system comprises male and female gender specific synthetic nutritional compositions for infants up to 1 month of age wherein the ratio of the total protein content between the female gender specific nutritional composition and male gender specific synthetic nutritional composition is 1:9.5 to 1:1.003, 1:9.5 to 1:1.07, 1:4 to 1.14, or 1:3.8 to 1:1.15, and/or the male gender specific nutritional composition comprises 1.7g to 0.001g, 0.6g to 0.1g, 0.6g to 0.3g, per 100mL more protein than the female gender specific nutritional composition.

In an embodiment the nutritional system comprises male and female gender specific synthetic nutritional compositions for infants up to 2 weeks of age wherein the ratio of the total protein content between the female gender specific nutritional composition and male gender specific synthetic nutritional composition is 1:3.8 to 1:1.003, 1:3.8 to 1:1.14, or 1:1.16 to 1.15, and/or the male gender specific nutritional composition comprises 1.7g to 0.001g, 1.7g to 0.1g, 0.3g to 0.1g, or 0.17 to 0.1g, per 100mL more protein than the female gender specific nutritional composition per 100mL.

In an embodiment the nutritional system comprises male and female gender specific synthetic nutritional compositions for infants 2 weeks to 1 month of age wherein the ratio of the total protein content between the female gender specific nutritional composition and male gender specific synthetic nutritional composition is 1:9.5 to 1:1.004, 1:9.5 to 1:1.07, or 1:4 to 1:1.07, and/or the male gender specific nutritional composition comprises 1.7g to 0.001g, 1.7g to 0.07g, or 0.6g to 0.07g, per 100mL more protein than the female gender specific nutritional composition per 100mL.

In addition to that disclosed hereinabove, the referenced study further indicated that between 31 and 240 days postpartum there is no difference in the mean total protein content of HM depending on the gender of the mother's infant.

In another embodiment the nutritional system further comprises gender specific synthetic nutritional compositions for infants more than 1 month of age wherein, the total protein content does not differ by gender for infants of the same age.

In another embodiment the nutritional system further comprises gender neutral specific synthetic nutritional compositions for infants more than 1 month of age.

Non limiting examples of ages, or ranges thereof, more than 1 month of age, include: 1-2mths, 2mth, 2-4mths, 3-6mths, 4-6mths, 4-8mths 6-12mths, 7-12mths.

The nutritional system may further comprise nutritional compositions for children older than 12months.

A nutrition system according to the invention is particularly suitable for use in a method of preparing single servings of infant formula using capsules, each capsule of which contains a unit dose of a synthetic nutritional composition in concentrated form, and which is equipped with opening means contained within the capsule to permit draining of the reconstituted synthetic nutritional composition directly from the capsule into a receiving vessel such as a baby bottle. Such a method is described in WO2006/077259.

The different synthetic nutritional compositions, including gender specific and gender neutral synthetic nutritional compositions, which may be comprised within a nutrition system, may be packed into individual capsules and presented to the consumer in multipacks containing a sufficient number of capsules to meet the requirements of an infant of a particular age or age range, for one week for example. Suitable capsule constructions are disclosed in WO2003/059778.

The capsules can contain the synthetic nutritional compositions, (gender specific and gender neutral) in the form of powders or concentrated liquids in both cases for reconstitution by an appropriate amount of water. Both the composition and the quantity of infant formula in the capsules may vary according to the gender and/or age of the infant. If necessary, different sizes of capsules may be provided for the preparation of infant formulas for infants of different genders and/or ages.

The nutritional systems of the invention, better reflect the differences in the total protein content of HM found by gender at one or more stages of lactation. As stated herein, optimum protein intake helps to ensure optimum growth and development in infants, and has been linked to a host of immediate and long term health benefits e.g. optimized immune functions, better gut maturation, optimum growth and development physically and cognitively, and a lower risk of obesity and cardiovascular disease in childhood and later life.

In another aspect of the present invention there is provided a nutritional system as disclosed herein for use to treat, prevent or mitigate sub optimal growth and development e.g. obesity, of an infant.

In another aspect there is disclosed the use of a nutritional system as disclosed herein for use in the manufacture of a medicament for use to treat, prevent or mitigate sub optimal growth and development e.g. obesity, of an infant.

A gender specific synthetic nutritional composition may provide an optimum amount of total protein to an infant, in particular an infant of up to 1 month of age, up to 2 weeks of age, and/or 2 weeks to 1 month of age.

The nutritional system may provide an optimum amount of total protein to an infant, in particular an infant of up to 12 months of age, up to 9 months of age, up to 8 months of age, up to 6 months of age, up to 3 months of age and/or up to 1 month of age.

In another aspect,there is provided a method for providing an optimum amount of total protein to an infant, in particular an infant of up to 1 month of age, up to 2 weeks of age, and/or 2 weeks to 1 month of age comprising:

a) Optionally preparing a gender specific synthetic nutritional composition from a gender neutral synthetic nutritional composition;
b) Feeding a gender specific synthetic nutritional composition to an infant up to 1 month of age, up to 2weeks of age or 2 weeks to 1 month of age.

As stated herein. The gender specific synthetic nutritional compositions may be prepared from gender neutral synthetic nutritional compositions. Accordingly, there is provided a kit for providing an optimized amount of total protein to an infant, in particular to an infant of up to 1 month of age, up to 2 weeks of age, and/or 2 weeks to 1 month of age, the kit comprising:

a) A gender neutral synthetic nutritional composition
b) A label indicating dosage requirements for an infant so as to arrive at a gender specific nutritional composition.

The dosage requirements may be with respect to the quantity of the gender neutral synthetic nutritional employed and/or consumption frequency e.g. 4 times per day.

The kit and method may provide an optimized amount of total protein to a male or female infant, in particular an infant of up to 1 month of age, up to 2 weeks of age or, 2 weeks to one month of age.

Subjects included in the survey referenced herein were recruited from 4 provinces across China. Accordingly, the gender specific synthetic nutritional compositions and/or nutritional systems disclosed herein can be particularly relevant for Chinese infants, and or infants born in populations having common genetic origins and/or ethnic origins and/or common dietary habits thereto e.g. Asian, Indian, and/or Mongoloid populations.

There now follows a series of non-limiting examples that serve to illustrate the invention.

## Examples

## Example 1

The total protein content of HM samples collected from mothers to either male or female infants was analysed at various stages postpartum. The HM samples were collected as part of a cross sectional survey of HM. The study criteria is set out below:

## Study population

• Number of subjects

Total 540 healthy subjects were enrolled, allowing a drop-out rate of 10 percent. They were comprised of:

- 480 Lactating mothers in 3 cities (Beijing, Suzhou and Guangzhou)

- 30 mothers per city for each of the 5 time points (5 toll days, 12 to 30 days, 1 to 2 months, 2 to 4 months, and 4 to 8 months)

**Inclusion/Exclusion criteria**

- Inclusion: Healthy Chinese lactating mothers without history of acute and chronic diseases; exclusively breast feeding mothers during 4 months after delivery were enrolled.

- Exclusion: Chinese lactating mothers having history of psychopathic tendencies and having no dietary memory.

The total protein content of the HM samples collected as part of the above detailed study were analysed by using a MIRIS human milk analyzer system according to the manufacturer's instructions (Miris AB, Uppsala, SWEDEN; www.miris.se).

The results of the compositional analysis of the HM survey, with respect to total protein content, are shown in table I.

Table I

| Total Protein Content g/100mL | | | | | | | | | |
|---|---|---|---|---|---|---|---|---|---|
| | Female | | | | | Male | | | |
| Stage | Min | Mean | SD | Max | | Min | Mean | SD | Max |
| 5 to 11 days | 0.6 | 1.21 | 0.36 | 2.0 | | 0.7 | 1.38 | 0.32 | 2.3 |
| 12 to 30 days | 0.2 | 1.01 | 0.26 | 1.9 | | 0.8 | 1.08 | 0.20 | 1.9 |
| 1 to 2 months | 0.6 | 0.91 | 0.17 | 1.4 | | 0.5 | 0.89 | 0.13 | 1.4 |
| 2 to 4 months | 0.1 | 0.79 | 0.15 | 1.1 | | 0.6 | 0.80 | 0.10 | 1.1 |
| 4 to 8 months | 0.2 | 0.75 | 0.18 | 1.2 | | 0.6 | 0.79 | 0.12 | 1.3 |

The results of the compositional analysis were then subject to a statistical analysis employing the following statistical model:

$$Concentration = sex + timeframe + timeframe + sex : timeframe - city + \varepsilon$$

$\varepsilon$ referring to the residual error and *sex:timeframe* referring to the interaction between these 2 variables.

The following table shows the estimates for gender differences per timeframe along with the corresponding Pvalues.

The results of the Statistical analysis (statistical inference) are show in in table II.

Table II

| Timeframe | Variable | Estimate | lower | Upper | Pvalue |
|---|---|---|---|---|---|
| 5 to 11 days | Total Protein | -0.1711565 | -0.2533585 | -0.08895452 | 0.000050228 |
| 12 to 30 days | Total Protein | -0.0911560 | -0.1754905 | -0.00682147 | 0.034192233 |
| 1 to 2 months | Total Protein | 0.0199763 | -0.0610390 | 0.10099167 | 0.628263093 |
| 2 to 4 months | Total Protein | -0.0130671 | -0.0927034 | 0.06656931 | 0.747288985 |
| 4 to 8 months | Total Protein | -0.0525148 | -0.1334552 | 0.02842555 | 0.202985485 |

A P-value inferior to 0.1 for a particular timeframe suggests that there is a statistically significant difference in the total protein content of HM produced for males and females infants at that specific timeframe.

As can be seen from the results in table II, a statistically significant difference in the total protein content between HM produced for male and female infants was identified at up to 1 month postpartum, more specifically 5 to 11 days postpartum, and 12 to 30 days postpartum. No statistically significant difference was identified in the total protein content between HM produced for male and female infants older than 1 month postpartum Viz. 1 to 2 months, 2 to 4 months

and 4 to 8 months.

## Example 2

Examples of gender specific infant formulas are given in table III

Table III

| Ingredients | Up to 2 weeks of age | | 2 weeks to 1 month of age | | Up to one month of age | |
|---|---|---|---|---|---|---|
| | F | M | F | M | F | M |
| | Per Litre | | Per Litre | | Per Litre | |
| Energy (kcal) | 670 | 670 | 670 | 670 | 670 | 670 |
| Protein (g) | 12.1 | 13.8 | 10.01 | 10.8 | 12.1 | 13.8 |
| Fat (g) | 35.7 | 35.7 | 35.7 | 35.7 | 35.7 | 35.7 |
| Linoleic acid (g) | 5.3 | 5.3 | 5.3 | 5.3 | 5.3 | 5.3 |
| $\alpha$-Linolenic acid (mg) | 675 | 675 | 675 | 675 | 675 | 675 |
| Lactose (g) | 74.7 | 74.7 | 74.7 | 74.7 | 74.7 | 74.7 |
| Prebiotic (100% GOS) (g) | 4.3 | 4.3 | 4.3 | 4.3 | 4.3 | 4.3 |
| Minerals (g) | 2.5 | 2.5 | 2.5 | 2.5 | 2.5 | 2.5 |
| Na (mg) | 150 | 150 | 150 | 150 | 150 | 150 |
| K (mg) | 590 | 590 | 590 | 590 | 590 | 590 |
| Cl (mg) | 430 | 430 | 430 | 430 | 430 | 430 |
| Ca (mg) | 410 | 410 | 410 | 410 | 410 | 410 |
| P (mg) | 210 | 210 | 210 | 210 | 210 | 210 |
| Mg (mg) | 50 | 50 | 50 | 50 | 50 | 50 |
| Mn ($\mu$g) | 50 | 50 | 50 | 50 | 50 | 50 |
| Se ($\mu$g) | 13 | 13 | 13 | 13 | 13 | 13 |
| Vitamin A ($\mu$g RE) | 700 | 700 | 700 | 700 | 700 | 700 |
| Vitamin D ($\mu$g) | 10 | 10 | 10 | 10 | 10 | 10 |
| Vitamin E (mg TE) | 5.4 | 5.4 | 5.4 | 5.4 | 5.4 | 5.4 |
| Vitamin K1 ($\mu$g) | 54 | 54 | 54 | 54 | 54 | 54 |
| Vitamin C (mg) | 67 | 67 | 67 | 67 | 67 | 67 |
| Vitamin B1 | 0.47 | 0.47 | 0.47 | 0.47 | 0.47 | 0.47 |
| Vitamin B2 (mg) | 1 | 1 | 1 | 1 | 1 | 1 |
| Niacin (mg) | 6.7 | 6.7 | 6.7 | 6.7 | 6.7 | 6.7 |
| Vitamin B6 (mg) | 0.5 | 0.5 | 0.5 | 0.5 | 0.5 | 0.5 |
| Lactoferrin (bovine) g | 1 | 1 | 1 | 1 | 1 | 1 |
| Folic acid ($\mu$g) | 60 | 60 | 60 | 60 | 60 | 60 |
| Pantothenic acid (mg) | 3 | 3 | 3 | 3 | 3 | 3 |
| Vitamin B12 ($\mu$g) | 2 | 2 | 2 | 2 | 2 | 2 |
| Biotin ($\mu$g) | 15 | 15 | 15 | 15 | 15 | 15 |
| Choline (mg) | 67 | 67 | 67 | 67 | 67 | 67 |

(continued)

| | Up to 2 weeks of age | | 2 weeks to 1 month of age | | Up to one month of age | |
|---|---|---|---|---|---|---|
| | F | M | F | M | F | M |
| Ingredients | Per Litre | | Per Litre | | Per Litre | |
| Fe (mg) | 8 | 8 | 8 | 8 | 8 | 8 |
| I (μg) | 100 | 100 | 100 | 100 | 100 | 100 |
| Cu (mg) | 0.4 | 0.4 | 0.4 | 0.4 | 0.4 | 0.4 |
| Zn (mg) | 5 | 5 | 5 | 5 | 5 | 5 |

Example 3

An example of a nutritional system in accordance with the invention is given in table IV.

Table IV

| | Up to one month of age | | 1 to 2 months of ages of age |
|---|---|---|---|
| Ingredients | F | M | Gender neutral |
| | Per Litre | | Per Litre |
| Energy (kcal) | 670 | 670 | 670 |
| Protein (g) | 12.1 | 13.8 | 9.1 |
| Fat (g) | 35.7 | 35.7 | 35.7 |
| Linoleic acid (g) | 5.3 | 5.3 | 5.3 |
| $\alpha$-Linolenic acid (mg) | 675 | 675 | 675 |
| Lactose (g) | 74.7 | 74.7 | 74.7 |
| Prebiotic (100% GOS) (g) | 4.3 | 4.3 | 4.3 |
| Minerals (g) | 2.5 | 2.5 | 2.5 |
| Na (mg) | 150 | 150 | 150 |
| K (mg) | 590 | 590 | 590 |
| Cl (mg) | 430 | 430 | 430 |
| Ca (mg) | 410 | 410 | 410 |
| P (mg) | 210 | 210 | 210 |
| Mg (mg) | 50 | 50 | 50 |
| Mn (μg) | 50 | 50 | 50 |
| Se (μg) | 13 | 13 | 13 |
| Vitamin A (μg RE) | 700 | 700 | 700 |
| Vitamin D (μg) | 10 | 10 | 10 |
| Vitamin E (mg TE) | 5.4 | 5.4 | 5.4 |
| Vitamin K1 (μg) | 54 | 54 | 54 |
| Vitamin C (mg) | 67 | 67 | 67 |
| Vitamin B1 (mg) | 0.47 | 0.47 | 0.47 |
| Vitamin B2 (mg) | 1 | 1 | 1 |

(continued)

| Ingredients | Up to one month of age | | 1 to 2 months of ages of age |
|---|---|---|---|
| | F | M | Gender neutral |
| | Per Litre | | Per Litre |
| Niacin (mg) | 6.7 | 6.7 | 6.7 |
| Vitamin B6 (mg) | 0.5 | 0.5 | 0.5 |
| Lactoferrin (bovine) g | 1 | 1 | 1 |
| Folic acid ($\mu$g) | 60 | 60 | 60 |
| Pantothenic acid (mg) | 3 | 3 | 3 |
| Vitamin B12 ($\mu$g) | 2 | 2 | 2 |
| Biotin ($\mu$g) | 15 | 15 | 15 |
| Choline (mg) | 67 | 67 | 67 |
| Fe (mg) | 8 | 8 | 8 |
| I ($\mu$g) | 100 | 100 | 100 |
| Cu (mg) | 0.4 | 0.4 | 0.4 |
| Zn (mg) | 5 | 5 | 5 |

**Claims**

1. A nutritional system comprising:

• at least one male gender specific synthetic nutritional composition for an infant up to 1 month of age wherein, the total protein content is adapted based on that found in human milk produced for an infant of the same gender and age and wherein said total protein content is 0.7 to 2.3g /100mL, preferably wherein the gender specific synthetic nutritional composition is selected from the groups consisting of: infant formula, and a composition for infants that is intended to be added to or diluted with human milk fortifier, and
• at least one female gender specific synthetic nutritional composition for an infant up to 1 month of age wherein, the total protein content is adapted based on that found in human milk produced for an infant of the same gender and age and wherein said total protein content is 0.2 to 2.0g /100mL, preferably wherein the gender specific synthetic nutritional composition is selected from the groups consisting of: infant formula, and a composition for infants that is intended to be added to or diluted with human milk fortifier,
wherein said gender specific synthetic nutritional compositions are for infants of the same age, and wherein the total protein content in said male gender specific nutritional composition is higher than that of said female gender specific synthetic nutritional composition and wherein said nutritional system further comprises gender specific synthetic nutritional compositions for infants of more than 1 month of age wherein, the total protein content of said gender specific synthetic nutritional compositions does not differ by gender for infants of the same age and/or wherein said nutritional system further comprises gender neutral synthetic nutritional compositions for infants of more than 1 month of age.

2. A nutritional system as defined in claim 1 for use in a therapeutic method to treat, protect or mitigate sub optimal growth and development of an infant.

**Patentansprüche**

1. Nährstoffsystem, umfassend:

• mindestens eine für das männliche Geschlecht spezifische synthetische Nährstoffzusammensetzung für einen Säugling im Alter von bis zu 1 Monat, wobei der Gesamtproteingehalt basierend auf dem, der in Humanmilch vorliegt, die für einen Säugling des gleichen Geschlechts und Alters produziert wird, angepasst ist, und wobei der Gesamtproteingehalt 0,7 bis 2,3 g/100 ml beträgt,
wobei die geschlechtsspezifische synthetische Nährstoffzusammensetzung vorzugsweise ausgewählt ist aus den Gruppen bestehend aus: Säuglingsformel und einer Zusammensetzung für Säuglinge, die dazu bestimmt ist, Humanmilchstärkungsmitteln zugegeben oder mit ihnen verdünnt zu werden, und
• mindestens eine für das weibliche Geschlecht spezifische synthetische Nährstoffzusammensetzung für einen Säugling im Alter von bis zu 1 Monat, wobei der Gesamtproteingehalt basierend auf dem, der in Humanmilch vorliegt, die für einen Säugling des gleichen Geschlechts und Alters produziert wird, angepasst ist, und wobei der Gesamtproteingehalt 0,2 bis 2,0 g/100 ml beträgt,
wobei die geschlechtsspezifische synthetische Nährstoffzusammensetzung vorzugsweise ausgewählt ist aus den Gruppen bestehend aus: Säuglingsformel und einer Zusammensetzung für Säuglinge, die dazu bestimmt ist, Humanmilchstärkungsmitteln zugegeben oder mit ihnen verdünnt zu werden, wobei die geschlechtsspezifischen synthetischen Nährstoffzusammensetzungen für Säuglinge im gleichen Alter vorgesehen sind, und wobei der Gesamtproteingehalt in der für das männliche Geschlecht spezifischen Nährstoffzusammensetzung höher ist als jener in der für das weibliche Geschlecht spezifischen synthetischen Nährstoffzusammensetzung und wobei das Nährstoffsystem ferner geschlechtsspezifische synthetische Nährstoffzusammensetzungen für Säuglinge im Alter von über 1 Monat umfasst, wobei der Gesamtproteingehalt der geschlechtsspezifischen synthetischen Nährstoffzusammensetzungen sich bei Säuglingen im gleichen Alter nicht hinsichtlich des Geschlechts unterscheidet und/oder wobei das Nährstoffsystem ferner geschlechtsneutrale synthetische Nährstoffzusammensetzungen für Säuglinge im Alter von über 1 Monat umfasst.

2. Nährstoffsystem nach Anspruch 1 zur Verwendung in einem therapeutischen Verfahren, um suboptimales Wachstum und Entwicklung eines Säuglings zu behandeln, davor zu schützen oder dies zu lindern.

**Revendications**

1. Système nutritionnel comprenant :

   • au moins une composition nutritionnelle synthétique spécifique du sexe masculin pour un nourrisson jusqu'à 1 mois d'âge, dans laquelle la teneur totale en protéines est adaptée en se basant sur celle trouvée dans le lait humain produit pour un nourrisson de mêmes sexe et âge et dans laquelle ladite teneur totale en protéines est de 0,7 à 2,3 g/100 mL,
   de préférence dans lequel la composition nutritionnelle synthétique spécifique du sexe est choisie dans les groupes constitués de : une préparation pour nourrissons, et une composition pour nourrissons qui est destinée à être ajoutée à un fortifiant pour lait humain ou diluée avec celui-ci, et
   • au moins une composition nutritionnelle synthétique spécifique du sexe féminin pour un nourrisson jusqu'à 1 mois d'âge, dans laquelle la teneur totale en protéines est adaptée en se basant sur celle trouvée dans le lait humain produit pour un nourrisson de mêmes sexe et âge et dans laquelle ladite teneur totale en protéines est de 0,2 à 2,0 g/100 mL,
   de préférence dans lequel la composition nutritionnelle synthétique spécifique du sexe est choisie dans les groupes constitués de : préparation pour nourrissons, et une composition pour nourrissons qui est destinée à être ajoutée à un fortifiant pour lait humain ou diluée avec celui-ci,
   dans lequel lesdites compositions nutritionnelles synthétiques spécifiques du sexe sont destinées à des nourrissons du même âge, et dans lequel la teneur totale en protéines dans ladite composition nutritionnelle synthétique spécifique du sexe masculin est plus élevée que celle de ladite composition nutritionnelle synthétique spécifique du sexe féminin et ledit système nutritionnel comprenant en outre des compositions nutritionnelles synthétiques spécifiques du sexe pour nourrissons âgés de plus de 1 mois, la teneur totale en protéines desdites compositions nutritionnelles synthétiques spécifiques du sexe ne différant pas selon le sexe pour les nourrissons du même âge et/ou ledit système nutritionnel comprenant en outre des compositions nutritionnelles synthétiques sans spécificité de sexe pour des nourrissons âgés de plus de 1 mois.

2. Système nutritionnel tel que défini dans la revendication 1 utilisable dans un procédé thérapeutique pour traiter, prévenir ou compenser la croissance et le développement suboptimaux d'un nourrisson.

**FIG. 1**

**EP 3 139 773 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 103404595
- US 2013261183 A
- WO 2012069416 A
- WO 2006077259 A
- WO 2003059778 A

### Non-patent literature cited in the description

- **LYNCH ; BARBANO.** *J AOAC International,* 1999, vol. 82, 1389
- **BRADFORD.** *Anal. Biochem.,* 1976, vol. 72, 248
- **SMITH et al.** *Anal. Biochem.,* 1985, vol. 150, 76
- **WRODNIGG, T. M. ; STUTZ, A.E.** *Angew. Chem. Int. Ed.,* 1999, vol. 38, 827-828